Europäisches Patentamt

(19) European Patent Office

Office européen des brevets

(11) Publication number: **0 124 043**
**B1**

# (12) EUROPEAN PATENT SPECIFICATION

(45) Date of publication of the patent specification:
**29.10.86**

(51) Int. Cl.⁴: **H 04 N 5/782**

(21) Application number: **84104492.8**

(22) Date of filing: **19.04.84**

(54) **Apparatus for dubbing videotape.**

(30) Priority: **25.04.83 JP 62427/83**
**25.04.83 JP 62428/83**
**25.04.83 JP 62429/83**

(43) Date of publication of application:
**07.11.84 Bulletin 84/45**

(45) Publication of the grant of the patent:
**29.10.86 Bulletin 86/44**

(84) Designated Contracting States:
**CH DE FR GB IT LI**

(56) References cited:
**GB - A - 2 091 515**
**US - A - 4 396 953**

(73) Proprietor: **Kano, Chiyuki, 489-5 Kotobukishirasebuchi, Matsumoto-shi Nagano-ken (JP)**

(72) Inventor: **Kano, Chiyuki, 489-5 Kotobukishirasebuchi, Matsumoto-shi Nagano-ken (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

ACTORUM AG

## Description

The present invention relates to an apparatus for dubbing videotape. More particularly, the invention is concerned with an apparatus which makes it possible to easily dub videotape from a VHS system to a beta system, from a VHS system to a VHS system, from a beta system to a VHS system, and from a beta system to a beta system.

When videotape is dubbed, since two types of videotapes, i.e., the VHS system videotape and the beta system videotape, exist, two types of video decks, i.e., the VHS system video deck and the beta system video deck, must be used as «source» decks. Further, two types of video decks, i.e., the VHS system video deck and the beta system video deck, must be used as «editor» decks as well. That is to say, four video decks in all are necessary to dub any two videotapes.

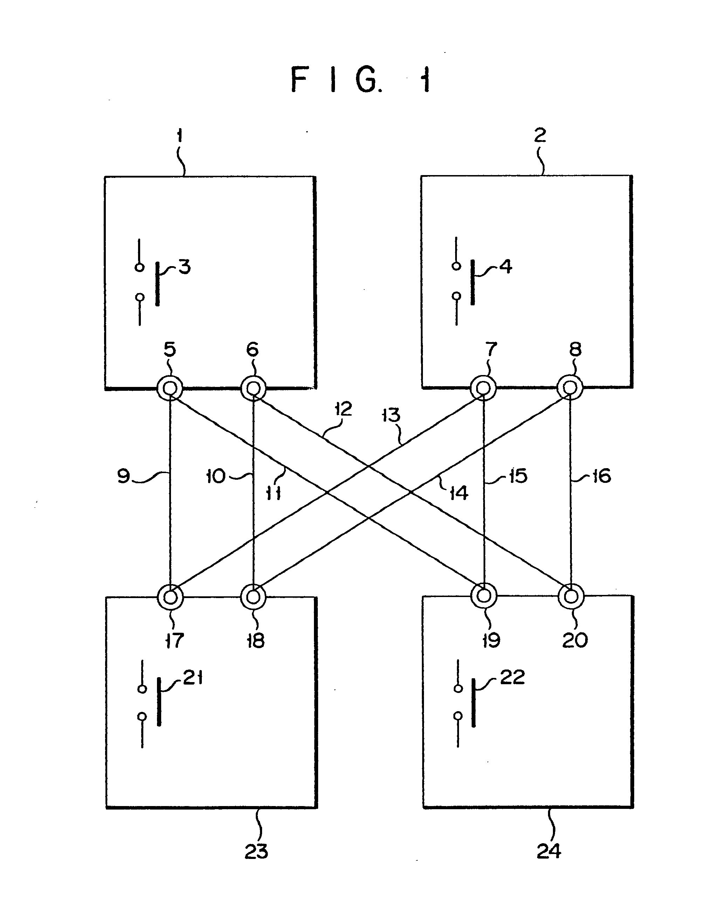

For this reason, when dubbing from the VHS system to the VHS system, for example, it is conventionally necessary that, as shown in Fig. 1, the video output 5 of a source VHS system video deck 1 be connected to the video input 17 of an editor VHS system video deck 23 by a video signal line 9. Further, the aural output 6 of the former source video deck is connected to the aural input 18 of the latter editor video deck by an aural signal line 10. After that, the reproduction switch 3 of the source video deck 1 is operated, at the same time, the recording switch 21 of the editor video deck 23 is operated. Further, when dubbing from the beta system to the beta system, it is necessary that the respective video output and input ends and the respective aural output and input ends of the source beta system video deck 2 and the editor beta system video deck 24 be connected to each other by a video signal line 15 and an aural signal line 16, respectively, and that the reproduction switch 4 of the former source video deck 2 and the recording switch 22 of the latter editor video deck 24 be simultaneously operated. Similarly, when dubbing from the VHS system to the beta system, it is necessary that the respective video output and input ends and the respective aural output and input ends of the source VHS system video deck 1 and the editor beta system video deck 24 be connected to each other by a video signal line 11 and an aural signal line 12, respectively, and that the reproduction switch 3 of the former source video deck 1 and the recording switch 22 of the latter editor beta video deck 24 be simultaneously operated. Similarly, when dubbing from the beta system to the VHS system, it was necessary that the respective video output and input ends and the respective aural output and input ends of the source beta system video deck 2 and the editor VHS system video deck 23 be connected to each other by a video signal line 13 and an aural signal line 14, respectively, and that the reproduction switch 4 of the former source video deck 2 and the recording switch 21 of the latter editor video deck 23 be simultaneously operated.

As seen from the foregoing, dubbing, according to the prior art method, is complicated and troublesome because it necessitates rewiring the video signal and aural signal lines each time it is performed in another mode. Further, for the same reason, an error is likely to be made in the rewiring with the result that the dubbing often fails to be effected. Further, according to the prior art method, a different reproduction or recording switch (button) must be operated in accordance with the dubbing mode. For this reason, errors in dubbing are common. A switch may be erroneously depressed, or in the worst cases, the contents of a valuable master tape may be erased.

Further, in the above-mentioned prior art method, the four video decks necessary for dubbing videotape and an operation box (not shown), also necessary for dubbing are exclusively used for dubbing, and as such are often simply put or arranged on a desk horizontally. Usually, one video deck or operation box occupies a floor area of approximately 1,600 cm$^2$. Accordingly, four video decks and one operation box occupy a floor area of 1,600 cm$^2 \times 5$ or 8,000 cm$^2$ in all. Further, where these video decks and the operation box are arranged in a coherent relationship to each other, or in a manner where they are in close contact with one another, the operability decreases. For this reason, it is necessary to have some space between each of the decks and the box. Accordingly, a floor area of approximately 12,000 cm$^2$ is usually needed. That is to say, it is difficult to find the necessary space.

Further, in a apparatus for dubbing videotape, for example, at the front area in a store, tracking is conventionally adjusted by causing the dubbed image to appear on a monitoring television set and, while viewing it, manually setting a tracking adjustment knob (not shown) to a position where the noises are the lowest. However, such a tracking adjustment is not preferable since it is manually performed and since it is difficult to set the tracking adjustment knob to an optimum position. Furthermore, such a tracking adjustment is not preferable because the contents of the tape are exposed to other tapes.

For the above reasons, an object of the present invention is to provide an apparatus for dubbing videotape which eliminates the necessity of carrying out the complicated rewiring operation and which is improved to allow good dubbing to be done using the desired dubbing mode by a simple operation.

Another object of the present invention is to provide an apparatus for dubbing videotape which is improved to lessen the installment area as much as possible.

Still another object of the present invention is to provide an apparatus for dubbing videotape which is improved to effect optimum tracking adjustment without relying on the human eye.

In an apparatus for dubbing videotape according to the present invention, a VHS system video deck and a beta system video deck are provided as «source» decks. At the same time, a VHS system video deck and a beta system video deck are also provided as «editor» decks. The respective video output ends of the VHS system and beta system video decks used as «source» decks are selectively switched to the video input ends of the video decks used as «editor» decks, while the respective aural output ends of the former source video decks are selectively switched to the aural input ends of the latter editor video decks by a VHS/beta switching means having substantially two switching sections. The respective reproduction switches of the source-side VHS and beta system video decks and the respectivve recording switches of the editor-side VHS and beta system video decks are connected to their corresponding sets of contacts on a dubbing start switch having four sets of contact and made common to each video deck.

According to the above-mentioned construction, it is readily possible to effectively dub videotape in a desired mode merely through the switching operation with the use of the VHS/beta switching means and the operation of the common dubbing start switch.

Further, the above-mentioned video decks are installed in a manner such that they are vertically piled up, and an operation box is installed or put on the uppermost video deck. By so doing, it is possible to minimize the area occupied by the decks and the box after their installment, as well as to ensure the high operability of each deck and box.

Further, envelope components are branched, separated or taken out of the reproduction signals of the source-side video decks. Those envelope components are indicated visually. By so doing, it becomes possible to effect the optimum tracking adjustment without relying entirely upon vision.

This invention can be more fully understood from the following detailed description when taken in conjunction with the accompanying drawings, in which:

Fig. 1 is a view for explaining the construction of a conventional videotape dubbing apparatus;

Fig. 2 is a view for explaining the construction of a videotape dubbing apparatus according to an embodiment of the present invention;

Fig. 3 is a view of the outer appearance of the actually installed apparatus of Fig. 2;

Fig. 4 is a partial view of the apparatus of Fig. 2 for explaining a tracking adjustment section thereof; and

Fig.5 is a wire connection diagram showing a detailed construction of the tracking adjustment section of Fig. 4.

An embodiment of the present invention will now be described with reference to the accompanying drawings.

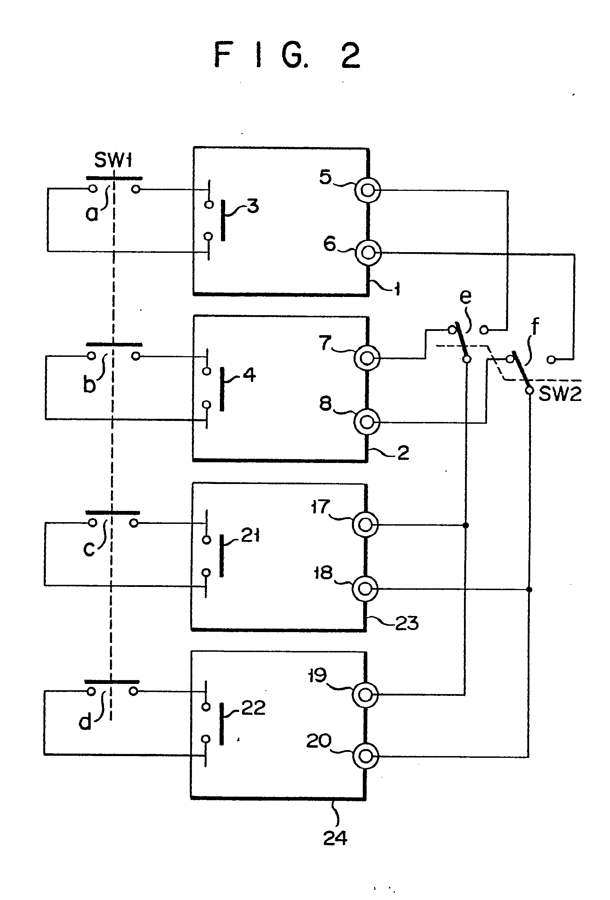

In the embodiment shown in Fig. 2, a VHS system video deck 1 and a beta system video deck 2 are provided as «source (master)» decks, while a VHS system video deck 23 and a beta system video deck 24 are provided as «editor» decks. Further, a dubbing start switch (SW1) having four sets of contacts a, b, c, and d is provided. One set (a) is connected to a reproduction switch 3 of the source VHS system video deck 1. Another set (b) is connected to a reproduction switch 4 of the source beta system video deck 2. A third set (c) is connected to a recording switch 21 of the editor VHS system video deck 23. And fourth or final set (d) is connected to a recording switch 22 of the editor beta system video deck 24. It is to be noted here that since the reproduction switch 3, reproduction switch 4, recording switch 21, and recording switch 22 originally equipped to video decks 1, 2, 23, 24, respectively, are generally of the normal-open type, they may be used as is, or they may be removed.

The video output end 5 of the source VHS system video deck 1 and the video output end 7 of the source beta system video deck 2 are connected so as to be selectively switched by one switching section e of a VHS/beta switch means (SW2) having substantially two switching sections. The video output line thus switched is connected to the respective video inputs 17 and 19 of the editor VHS system video deck 23 and the editor beta system video deck 24. Further, the aural output 6 of the source VHS system video deck 1 and the aural output end 8 of the source beta system video deck 2 are connected so as to be selectively switched by the other switching section f of said VHS/beta switching means (SW2). The aural output line thus switched is connected to the respective aural input ends 18 and 20 of the editor VHS system video deck 23 and the editor beta system video deck 24.

Since the present invention has the above-mentioned construction, it eliminates the necessity of performing the complicated rewiring operation of the video signal lines and aural signal lines as in the prior art apparatus. That is to say, if the master videotape is of the VHS system or of the beta system, it can be used by a simple switching operation of the VHS/ beta switching means (SW2). Further, if the editor's copy of the videotape is of the VHS system or of the beta system, or if the videotape can be used in both the VHS and beta system, it can be used without any individual or specific operation.

Further, since dubbing is initiated by merely depressing the dubbing start switch (SW1), it becomes unnecessary to perform the complicated starting operation which in the prior art is carried out by the troublesome selection of reproduction switches and recording switches. Further, since according to the present invention no mistaken depressions of the reproduction and recording switches takes place unlike in the prior art apparatus, the videotape is reliably subjected to dubbing. Further, no accidental erasing of the contents of a valuable master tape occurs.

It should be noted here that although, in the above-mentioned embodiment, the video signal line of the editor's copy is merely branched and connected to the respective video input ends 17 and 19, the video signal line may be connected without being branched to the video input end of either one of the master VHS and beta system video decks, the video output end of which is then connected to a video input end of the other said editor-side VHS and beta system video decks. Further, such a video signal line of the edit deck may be connected to the respective video input ends through a suitable distributor.

It should also be noted here that the VHS/beta switching means (SW2) may be a contact switch, or may be a non-contact switch, e.g., an analog switch. Further, the VHS/beta switching means (SW2) is not necessarily limited to a type which is manually operable for a reason to be described later.

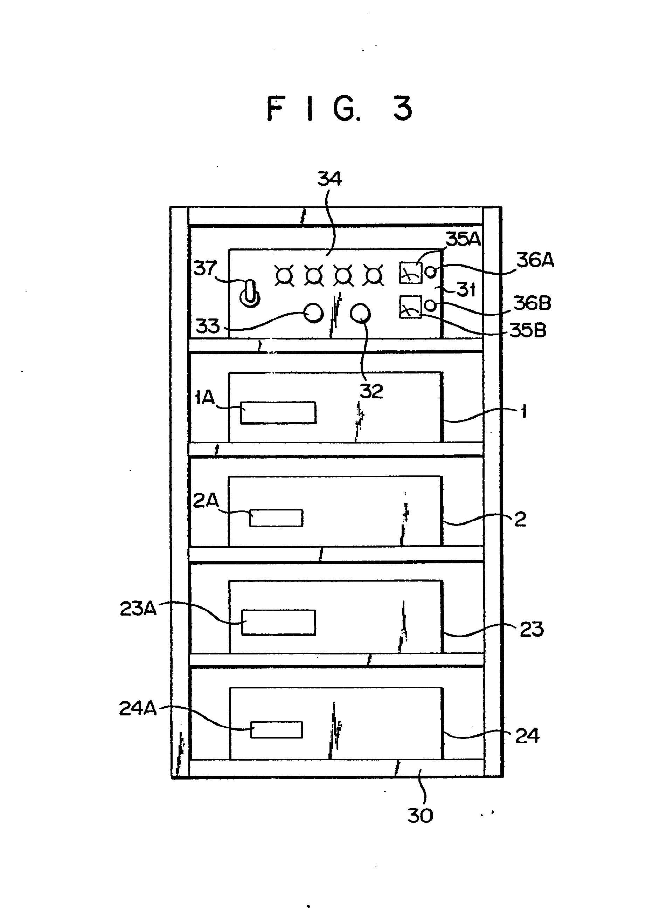

Fig. 3 shows the outer appearance of the above-mentioned actually installed videotape dubbing apparatus. An exclusive operation box 31, as later described, is placed on the uppermost stage of a rack 30 for receiving the video decks and the operation box. The source VHS system video deck 1 is placed on the next uppermost stage and the master beta system video deck 2 is placed on the third stage from the uppermost stage. Further, the edit VHS system video deck 23 is placed on the fourth stage as counted from the uppermost stage, and the edit beta system video deck 24 is placed on the lowest stage.

If, in the above-mentioned arrangement of the video decks 1, 2, 23 and 24, the reproduction switch buttons 3 and 4, recording switch buttons 21 and 22, the power source switch (not shown), etc., are individually depressed or operated, then such depressing or operating procedures can become complicated. To avoid this complexity, the operation box 31 is so arranged as to operate such buttons or switchs collectively. In this case, the operation box 31 is equipped with a rewinding button 33, various display lamps 34, VHS and beta tracking meters 35A and 35B, VHS and beta tracking adjustment knobs 36A and 36B, and a key switch closure opening 37, as well as the above-mentioned start button 32 for the dubbing start switch (SW1). The rewinding button 33 is used not only to rewind each tape after dubbing but is also to start dubbing, since each tape is rewound to the initial position before starting dubbing.

It should be noted here that since the above-mentioned VHS/beta switching means (SW2) can be substituted by a microswitch relay or the like, which is arranged to detect whether or not the videotapes have been inserted in the tape insertion openings 1A, 2A, 23A, and 24A of the video decks 1, 2, 23, and 24, respectively, the above-mentioned operation box 31 has no switch button for said switching means (SW2). In this case, the videotape which is initially inserted is arranged with respect to the source side to be preferentially handled.

If the videotape dubbing apparatus according to the present invention is acutally installed with the above-mentioned construction, the floor area it occupies is only about 2,500 cm². Therefore, the apparatus can be installed even in a place having an area which is approximately 1/4 of the area required in the conventional case. This has offered a great convenience.

Further, since according to the above-mentioned construction the video decks 1, 2, 23, and 24 are placed on the lower stages, respectively, the uppermost stage on which the operation box has been placed is almost equal in height to the arm of a human adult when standing. Since the operation box, which is most frequently used, is disposed or put there, it is very easy to operate or handle. Note here that it is also possible to actually install the above-mentioned four video decks 1, 2, 23, and 24 in a manner that their relative vertical positions are altered. Namely, according to the present invention, it is essential to vertically pile the video decks and operation box and to place this operation box on the uppermost stage, rather than placing such decks and the box in the horizontal arrangement of the prior art.

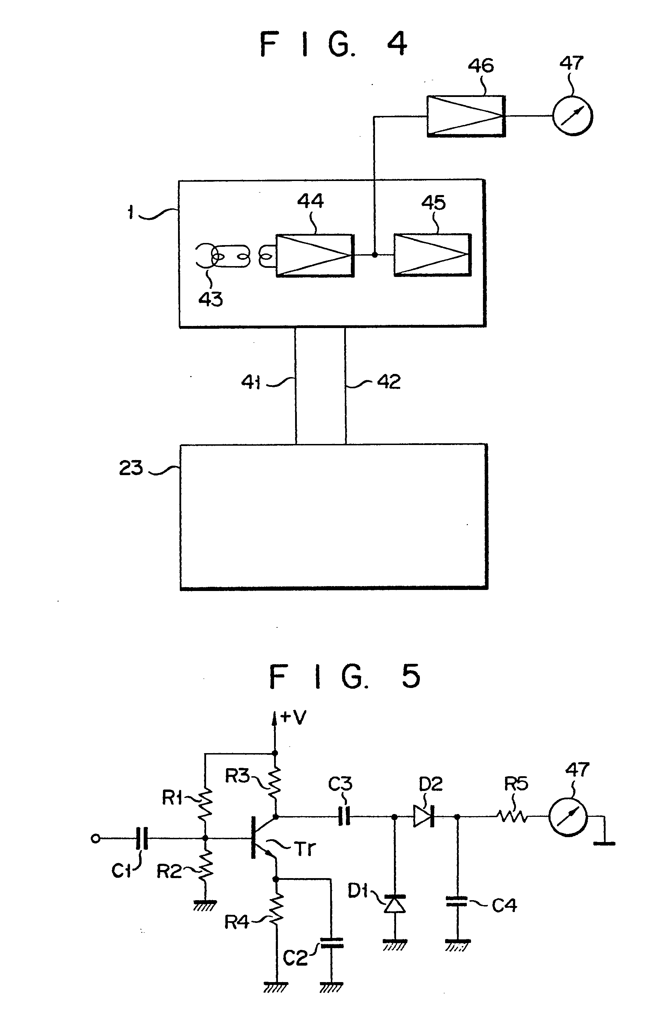

Fig. 4 is a partial view of the above-mentioned apparatus of the present invention showing a tracking adjustment section thereof. In this tracking adjustment section, the master video deck 1 and the edit video deck 23 are connected to each other by a video signal line 41 and an aural signal line 42 through a change-over switch, and a reproduction signal taken out of the head 43 of the master video deck 1 is amplified by a head amplifier 44. The envelope components are branched on the way to a limiting amplifier 45, etc., and are amplified by an amplifier 46 as later described. Thus, the amplified envelope components can be visually observed by means of a visual indicator 47 composed of a meter and various display means.

In Fig. 5, a detailed construction of the amplifier 46 is shown. In Fig. 5, resistors R1, R2, R4, and a capacitor C2 are provided for the purpose of applying a bias to a transistor Tr. The above envelope components branched from the reproduction signal are supplied to the base of the transistor Tr through the capacitor C1 and have their voltage amplified by a resistor R3. Where the collector voltage of the transistor Tr is thereby decreased, current is allowed to flow into a capacitor C3 through a diode D1. Where the collector voltage of the transistor Tr is increased, an electric current is allowed to flow into the visual indicator 47 through a diode D2, thereby allowing a needle or pointer to oscillate. Since the envelope components are high frequency components, the pointer of the visual indicator 47 oscillates corresponding to their amplitude. A resistor R5 is intended to adjust the amount of oscillation of the visual indicator 47.

Since the tracking adjustment section of the videotape dubbing apparatus according to the present invention is constructed as mentioned above, at the time of adjusting the tracking conditions it is sufficient to set the tracking adjustment knob (see Fig. 3) to a position where the pointer of the visual indicator 46 shows the highest degree of oscillation.

For this reason, it is possible to reliably set the tracking to an optimum position and, at the same time, since it is not necessary to cause an image being tracked to appear on a television image receiver, unlike in the prior art apparatus, it is possible to prevent the contents of a valuable videotape to be dubbed by being exposed or disclosed to others.

Where the above-mentioned visual indicator 47 is composed of, for example, a meter, it is installed within the operation box 31 as shown in Fig. 3A and 3B.

The present invention is not limited to the above-mentioned and illustrated embodiment, but can be modified in various forms without departing from the subject matter of the invention.

**Claims**

1. An apparatus for dubbing videotape including VHS system and beta system video decks for use as master decks and VHS system and beta system video decks for use as edit decks, comprising:

a VHS/beta change-over switch means having substantially two switching sections, for selectively switching respective video output ends and respective aural output ends of said master VHS system and beta system video decks thereby connecting them to respective video input ends, and respective aural input ends of said VHS system and beta system video decks; and

a dubbing start switch common to each of said decks and having four sets of contacts connected to respective reproduction switches of said master VHS system and beta system video decks and respective recording switches of said edit VHS system and beta system video decks.

2. An apparatus for dubbing videotape according to claim 1, characterized in that said VHS system and beta system video decks for use as master decks and said VHS system and beta system video decks for use as edit decks are actually installed in a manner that they are vertically piled up; and an operation box having an operation section for operation of at least said dubbing start switch is placed on top of said vertical arrangement of said video decks.

3. An apparatus for dubbing videotape according to claim 1, which further comprises a visual indicator for indicating the amplitude of the envelope components branched and taken out from said reproduction signals of said master video decks.

4. An apparatus for dubbing videotape according to claim 3, characterized in that said envelope components are supplied to said visual indicator through an amplifier comprised of an amplifying transistor and a capacitor and diode circuit charged with, or discharging, an electric current upon receipt of an output from said amplifying transistor.

5. An apparatus for dubbing videotape according to claim 3, characterized in that said visual indicator is composed of a meter.

6. An apparatus for dubbing videotape according to claim 2, characterized in that said operation box further has said meter.


**Patentansprüche**

1. Anordnung zum Überspielen eines Videobandes mit VHS-System- und Beta-System-Videobandgeräten für die Verwendung als Masterbandgeräte und VHS-System- und Beta-System-Videobandgeräten für die Verwendung als Schneidgeräte, enthaltend:

eine VHS/Beta-Umschalteinrichtung mit im wesentlichen zwei Schaltsektionen zum selektiven Schalten entsprechender Videoausgangsenden und entsprechender Audioausgangsenden der VHS-System- und Beta-System-Videomastergeräte, um diese dadurch mit entsprechenden Videoeingangsenden und entsprechenden Audioeingangsenden der VHS-System- und Beta-System-Videoschneidgeräte zu verbinden; und

einen Überspielstartschalter, der allen Geräten gemeinsam ist und vier Kontaktsätze aufweist, die mit entsprechenden Wiedergabeschaltern der VHS-System- und Beta-System-Videomastergeräte und entsprechenden Aufnahmeschaltern der VHS-System- und Beta-System-Videoschneidgeräte verbunden sind.

2. Anordnung zum Überspielen eines Videobandes nach Anspruch 1, dadurch gekennzeichnet, dass die VHS-System- und Beta-System-Videobandgeräte für die Verwendung als Masterbandgeräte und die VHS-System- und Beta-System-Videobandgeräte für die Verwendung als Schneidgeräte tatsächlich in einer solchen Weise installiert sind, dass sie vertikal übereinander angeordnet sind; und dass ein Bedienkasten mit einem Bedienfeld zur Betätigung wenigstens des Überspiel-Startschalters oberhalb der vertikalen Anordnung der genannten Videobandgeräte angeordnet ist.

3. Anordnung zum Überspielen eines Videobandes nach Anspruch 1, die weiterhin eine optische Anzeigeeinrichtung zum Anzeigen der Amplitude der Hüllkomponenten aufweist, die von den Wiedergabesignalen der Videomastergeräte abgezweigt und herausgeführt sind.

4. Anordnung zum Überspielen eines Videobandes nach Anspruch 3, dadurch gekennzeichnet, dass die Hüllkomponenten der optischen Anzeigeeinrichtung über einen Verstärker zugeführt werden, der aus einem Verstärkungstransistor und einem Kondensator und einem Diodenkreis besteht, der beim Empfang eines Ausgangs vom Verstärkungstransistor mit einem elektrischen Strom belastet wird oder diesen ableitet.

5. Anordnung zum Überspielen eines Videobandes nach Anspruch 3, dadurch gekennzeichnet, dass die optische Anzeigeeinrichtung aus einem Messgerät besteht.

6. Anordnung zum Überspielen eines Videobandes nach Anspruch 2, dadurch gekennzeichnet, dass der Betätigungskasten weiterhin das Messgerät aufweist.


**Revendications**

1. Appareil pour réenregistrer des bandes vidéo comprenant des platines vidéo du système VHS et du système bêta aux fins d'utilisation comme platines mères, ainsi que das platines vidéo du système VHS et du système bêta aux fins d'utilisation comme platines d'édition, caractérisé en ce qu'il comprend:

— un moyen de commutations VHS/bêta possédant essentiellement deux sections de commutation pour inverser sélectivement les bornes de sortie vidéo respectives et les bornes de sortie acoustique respectives desdites platines mères vidéo de système VHS et de système bêta, en les connectant de ce fait aux bornes d'entrée vidéo respectives et aux bornes d'entrée acoustique respectives desdites platines vidéo de système VHS et de système bêta d'édition; et

— un interrupteur de départ de repiquage commun à chacune desdites platines et ayant quatre jeux de contact connectés aux interrupteurs respectifs de reproduction desdites platines mères de système VHS et de système bêta et aux interrupteurs respectifs d'enregistrement desdites platines vidéo de système VHS et de système bêta d'édition.

2. Appareil pour réenregistrer des bandes vidéo selon la revendication 1, caractérisé en ce que lesdites platines vidéo de système VHS et de système bêta pour utilisation comme platines mères et que lesdites platines vidéo de système VHS et de système bêta pour utilisation comme platines d'édition sont en réalité installées de façon à être empilées verticalement; et qu'une boîte de commande possédant une section de commande pour commander au moins ledit interrupteur de départ de repiquage est placée en haut de cette disposition verticales desdites platines vidéo.

3. Appareil pour réenregistrer des bandes vidéo selon la revendication 1, caractérisé par le fait qu'il comprend en outre un indicateur visuel pour indiquer l'amplitude des composantes d'enveloppe branchées et retirées des signaux de reproduction desdites platines vidéo mères.

4. Appareil pour réenregistrer des bandes vidéo selon la revendication 3, caractérisé en ce que lesdites composantes d'enveloppe sont fournies audit indicateur visuel par l'intermédiaire d'un amplificateur constitué d'un transistor d'amplification et d'un circuit à condensateur et diode chargé d'un courant électrique ou s'en déchargeant à la réception d'un signal de sortie dudit transistor d'amplification.

5. Appareil pour réenregistrer des bandes vidéo selon la revendication 3, caractérisé en ce que ledit indicateur visuel est constitué d'un instrument de mesure.

6. Appareil pour réenregistrer des bandes vidéo selon la revendication 2, caractérisé en ce que ladite boîte de commande possède en outre ledit instrument de mesure.

# F I G. 1

F I G. 2

# F I G. 3

# F I G. 4

# F I G. 5